# EUROPÄISCHE PATENTANMELDUNG

(11) **EP 3 799 283 A1**
(43) Veröffentlichungstag der Anmeldung: **31.03.2021**
(21) Anmeldenummer: 19199206.4
(22) Anmeldetag: 24.09.2019
(51) Int. Cl.: H02M 1/34, H02M 7/487, H02M 1/44

(54) **CLAMPINGSCHALTUNG BEI EINEM GLEICHRICHTER MIT MEHR ALS ZWEI AUSGANGSSEITIG BEREITGESTELLTEN POTENZIALEN**

(71) Anmelder: Siemens Aktiengesellschaft, 80333 München (DE)
(72) Erfinder: Hensler, Alexander, 90766 Fürth (DE); Oschmann, Philipp, 91058 Erlangen (DE); Schierling, Hubert, 91052 Erlangen (DE)

(57) **Zusammenfassung**

Ein Gleichrichter (2) weist mindestens drei Ausgänge (3) auf, an denen der Gleichrichter (2) ein hohes Potenzial (U+), ein niedriges Potenzial (U-) und mindestens ein mittleres Potenzial (U0) bereitstellt. Über Speiseleitungen (5) sind dem Gleichrichter (2) Phasenspannungen (L1, L2, L3) eines Versorgungsnetzes (6) zuführbar. In den Speiseleitungen (5) sind Drosseln (8) angeordnet. Eine Clampingschaltung (13) weist zwei in Reihe geschaltete Diodenschaltungen (14) auf. Einer der Endpunkte (15) der Reihenschaltung ist mit einem Ausgang (3) verbunden, an dem der Gleichrichter (2) eines der mittleren Potenziale (U0) bereitstellt. Der andere Endpunkt (15) ist mit einem anderen Ausgang (3) verbunden. Über eine Gesamt-Kondensatorschaltung (16) ist der Knotenpunkt (17) mit einem Referenzpotenzial (PE) verbunden.

## Beschreibung

Die vorliegende Erfindung geht aus von einer Gleichrichterschaltung,
- wobei die Gleichrichterschaltung einen Gleichrichter aufweist,
- wobei der Gleichrichter mindestens drei Ausgänge aufweist, an denen der Gleichrichter jeweils ein Potenzial bereitstellt,
- wobei eines der bereitgestellten Potenziale ein hohes Potenzial ist, das höher als alle anderen bereitgestellten Potenziale ist,
- wobei ein weiteres der bereitgestellten Potenziale ein niedriges Potenzial ist, das niedriger als alle anderen bereitgestellten Potenziale ist,
- wobei die bereitgestellten Potenziale mit Ausnahme des hohen Potenzials und des niedrigen Potenzials mittlere Potenziale sind, die zwischen dem hohen und dem niedrigen Potenzial liegen,
- wobei die Gleichrichterschaltung mehrere Speiseleitungen aufweist, über die dem Gleichrichter jeweils eine Phasenspannung eines Versorgungsnetzes zuführbar ist,
- wobei die Gleichrichterschaltung in den Speiseleitungen angeordnete Drosseln aufweist.

Derartige Gleichrichterschaltungen sind allgemein bekannt.

Beispielsweise sind sogenannte Vienna-Rectifier bekannt. Bei einem Vienna-Rectifier ist ein Brückengleichrichter vorhanden, dessen gleichrichtende Elemente als Dioden ausgebildet sind. Mittels des Brückengleichrichters werden das hohe und das niedrige Potenzial bereitgestellt. Weiterhin sind die Phasenspannungen innerhalb des Vienna-Rectifiers über eine jeweilige bidirektional schaltbare Schalteinrichtung mit dem Ausgang für das mittlere Potenzial verbunden. Die jeweilige bidirektional schaltbare Schalteinrichtung kann beispielsweise als Reihenschaltung von zwei Halbleiter-Schaltelementen ausgebildet sein, beispielsweise Bipolar- oder FeldeffektTransistoren.

Weiterhin sind sogenannte 3L-Gleichrichter (3L steht für 3 Level) bekannt. Bei einem 3L-Gleichrichter ist ein Brückengleichrichter vorhanden, dessen gleichrichtende Elemente als schaltbare Elemente (meist Transistoren) ausgebildet sind. Weiterhin sind die Phasenspannungen innerhalb des 3L-Gleichrichters über bidirektional schaltbare Schalteinrichtungen mit dem Ausgang für das mittlere Potenzial verbunden.

Weiterhin sind auch Multilevelgleichrichter bekannt, also Gleichrichter, die ausgangsseitig mehr als drei Potenziale bereitstellen.

Die Gleichrichterschaltung speist oftmals einen Zwischenkreis, aus dem heraus wiederum Lasten gespeist werden. Beispielsweise können über Frequenzumrichter elektrische Antriebe mit Wechselstrom variabler Amplitude und variabler Frequenz gespeist werden. Beim Betrieb der Lasten können beispielsweise in den Leitungen von der Gleichrichterschaltung zu den Lasten hochfrequente Störungen auftreten, die ihrerseits Rückwirkungen auf die Gleichrichterschaltung und auch auf die angeschlossenen Lasten haben können. Beispielsweise bilden die Leitungen von der Gleichrichterschaltung zu den Lasten parasitäre Kapazitäten, welche in Verbindung mit den eingangsseitigen Drosseln der Gleichrichterschaltung in Resonanz treten können. Dies kann einen sogenannten Gleichtaktstrom bewirken, der durch die Verluste in den Drosseln oftmals nur unzureichend gedämpft wird. Dadurch kann es zu einer Spannungsüberhöhung zwischen dem Gleichspannungszwischenkreis und dem Referenzpotenzial (beispielsweise Erde) kommen. Unabhängig von der Art der Störung ist die Störung jedoch oftmals von Nachteil und sollte so weit wie möglich unterdrückt oder zumindest gering gehalten werden.

Im Stand der Technik wird zur stärkeren Dämpfung des Gleichtaktstroms oftmals eine passive Dämpfung eingesetzt. Zu diesem Zweck werden den eingangsseitigen Drosseln der Gleichrichterschaltung Hilfswicklungen zugeordnet. Die Hilfswicklungen werden miteinander sowie einem Widerstand in Reihe geschaltet. Die Hilfswicklungen dämpfen nur die Gleichtaktschwingungen. Nachteilig bei dieser Lösung sind zum einen die relativ hohen Verlustleistungen, die zu einer Reduzierung des Wirkungsgrades und zu Problemen beim Abführen der auftretenden Wärme führen können. Ein weiterer Nachteil sind die relativ hohen Kosten.

Im Stand der Technik ist bei 2L-Gleichrichtern - also bei Gleichrichtern, bei denen der Gleichrichter exakt zwei Ausgänge aufweist, an denen der Gleichrichter ein hohes und ein niedriges Potenzial bereitstellt - weiterhin eine sogenannte Clampingschaltung bekannt. Diese Clampingschaltung weist eine Reihenschaltung von zwei Diodenschaltungen auf, so dass die Reihenschaltung einen zwischen den beiden Diodenschaltungen angeordneten Knotenpunkt und zwei Endpunkte aufweist. Je einer der beiden Endpunkte ist mit einem der beiden Ausgänge des Gleichrichters verbunden. Der Knotenpunkt ist über eine Gesamt-Kondensatorschaltung der Clampingschaltung mit einem Referenzpotenzial verbunden. Die Clampingschaltung begrenzt ein Springen des hohen Potenzials und des niedrigen Potenzials relativ zu dem Referenzpotenzial auf die Hälfte der Potenzialdifferenz zwischen dem hohen und dem niedrigen Potenzial.

Die Aufgabe der vorliegenden Erfindung besteht darin, eine Gleichrichterschaltung der eingangs genannten Art derart weiterzuentwickeln, dass Störungen, insbesondere ein Gleichtaktstrom, mit möglichst geringem Aufwand so weit wie möglich reduziert und unterdrückt werden können.

Die Aufgabe wird durch eine Gleichrichterschaltung mit den Merkmalen des Anspruchs 1 gelöst. Vorteilhafte Ausgestaltungen der Gleichrichterschaltung sind Gegenstand der abhängigen Ansprüche 2 und 3.

Erfindungsgemäß wird eine Gleichrichterschaltung der eingangs genannten Art dadurch ausgestaltet,
- dass die Gleichrichterschaltung mindestens eine Clampingschaltung aufweist,
- dass die Clampingschaltung eine Reihenschaltung von zwei Diodenschaltungen aufweist, so dass die Reihenschaltung einen zwischen den beiden Diodenschaltungen angeordneten Knotenpunkt und zwei Endpunkte aufweist,
- dass einer der Endpunkte mit einem der Ausgänge verbunden ist, an denen der Gleichrichter eines der mittleren Potenziale bereitstellt,
- dass der andere Endpunkt mit einem anderen der Ausgänge verbunden ist und
- dass die Clampingschaltung eine Gesamt-Kondensatorschaltung aufweist, über die der Knotenpunkt mit einem Referenzpotenzial verbunden ist.

Die Gleichrichterschaltung wird also vom Ansatz her um eine Campingschaltung ergänzt, wie sie für einen 2L-Gleichrichter bekannt ist. Die Endpunkte der Diodenschaltung der Clampingschaltung werden aber nicht mit den Ausgängen für das hohe und das niedrige Potenzial verbunden, sondern mit einem der Ausgänge, an denen der Gleichrichter eines der mittleren Potenziale bereitstellt, und einem weiteren Ausgang. Der weitere Ausgang kann zwar einer der beiden Ausgänge sein, an denen der Gleichrichter das hohe und das niedrige Potenzial bereitstellt. Mindestens einer der beiden über die Clampingschaltung miteinander verbundenen Ausgänge ist jedoch von diesen beiden Ausgängen verschieden. Die von der Clampingschaltung überbrückte Potenzialdifferenz ist daher kleiner als Potenzialdifferenz zwischen dem hohen und dem niedrigen Potenzial. Die Clampingschaltung begrenzt ein Springen der von der Gleichrichterschaltung bereitgestellten Potenziale (einschließlich des hohen Potenzials und des niedrigen Potenzials) relativ zu dem Referenzpotenzial auf die Hälfte der Potenzialdifferenz zwischen den beiden Potenzialen der beiden Ausgänge, die über die Diodenschaltung der Clampingschaltung miteinander verbunden sind.

In einer bevorzugten Ausgestaltung ist vorgesehen,
- dass die Gesamt-Kondensatorschaltung mindestens eine Reihenschaltung aufweist, die aus zwei Teil-Kondensatorschaltungen besteht,
- dass die eine Teil-Kondensatorschaltung den Knotenpunkt mit einem Leitungsabschnitt einer der Speiseleitungen verbindet,
- dass die andere Teil-Kondensatorschaltung denselben Leitungsabschnitt mit dem Referenzpotenzial verbindet und
- dass die in der entsprechenden Speiseleitung angeordnete Drossel zwischen dem Gleichrichter und dem Leitungsabschnitt angeordnet ist.

Diese Ausgestaltung nutzt den Umstand, dass die Teil-Kondensatorschaltung, die einen Leitungsabschnitt mit dem Referenzpotenzial verbindet, aus anderen Gründen oftmals bereits vorhanden ist. Sie bringt insbesondere den Vorteil mit sich, dass innerhalb der Gleichrichterschaltung nur eine einzelne Anschaltung an das Referenzpotenzial erforderlich ist. Anderenfalls würden zwei Anschaltungen existieren, was oftmals wiederum zu Problemen führen kann.

Es ist möglich, dass die Gesamt-Kondensatorschaltung direkt, also ohne zwischengeschaltete Elemente, mit dem Knotenpunkt zwischen den beiden Diodenschaltungen verbunden ist. Vorzugsweise ist aber vorgesehen,
- dass die Clampingschaltung ein Schaltungsnetzwerk aufweist,
- dass das Schaltungsnetzwerk zwischen dem Knotenpunkt und der Gesamt-Kondensatorschaltung angeordnet ist und
- dass das Schaltungsnetzwerk einen Varistor mit einem oder ohne einen in Reihe geschalteten Widerstand, eine Zenerdiode mit einem oder ohne einen in Reihe geschalteten Widerstand, einen Dämpfungswiderstand oder eine Reihenschaltung eines Widerstandes und eines Kondensators mit einem oder ohne einen den Kondensator überbrückenden Widerstand aufweist.

Durch diese Ausgestaltung können insbesondere ein Feintuning des Verhaltens der Clampingschaltung und eine Reduzierung des über die Clampingschaltung fließenden Stromes erreicht werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Gleichrichterschaltung und ergänzende Komponenten,
- FIG 2: eine mögliche Ausgestaltung eines Gleichrichters,
- FIG 3: eine weitere mögliche Ausgestaltung eines Gleichrichters,
- FIG 4: eine Modifikation der Gleichrichterschaltung von FIG 1 und
- FIG 5: mögliche Ausgestaltungen eines Schaltungsnetzwerks.

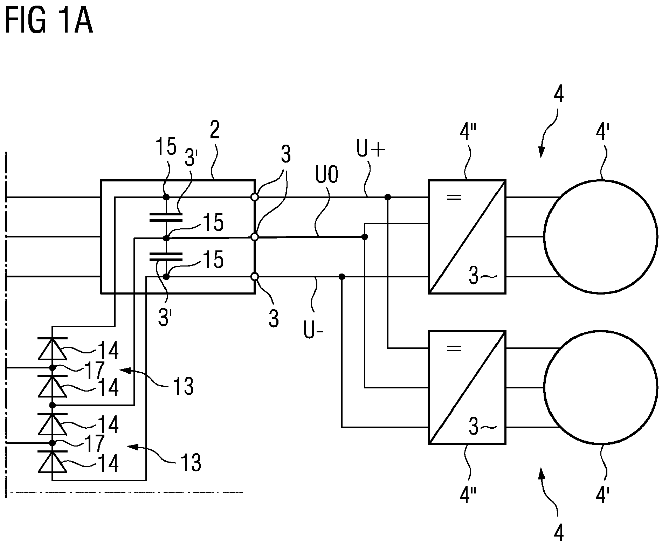

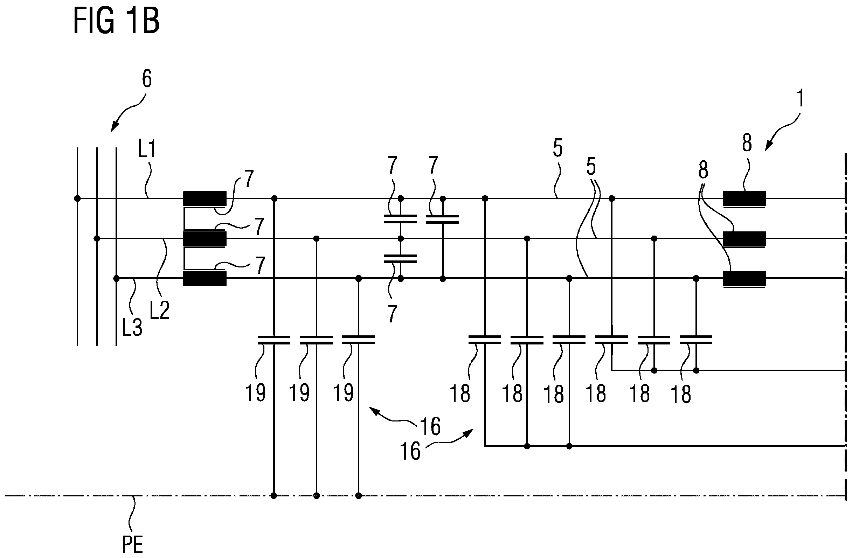

Gemäß FIG 1 weist eine Gleichrichterschaltung 1 einen Gleichrichter 2 auf. Der Gleichrichter 2 weist mindestens drei Ausgänge 3 auf. Die Ausgänge 3 sind üblicherweise über Stützkondensatoren 3' miteinander verbunden. An jedem der Ausgänge 3 stellt der Gleichrichter 2 jeweils ein Potenzial U+, UO, U-bereit. Die bereitgestellten Potenziale U+, UO, U- sind Gleichspannungspotenziale. Das Potenzial U+ ist das höchste von dem Gleichrichter 2 bereitgestellte Potenzial. Es wird nachfolgend als hohes Potenzial U+ bezeichnet. Das Potenzial U- ist das niedrigste von dem Gleichrichter 2 bereitgestellte Potenzial. Es wird nachfolgend als niedriges Potenzial U- bezeichnet. Alle anderen von dem Gleichrichter 2 bereitgestellten Potenziale UO - hier nur ein einziges Potenzial UO - liegen zwischen dem hohen Potenzial U+ und dem niedrigen Potenzial U-. Sie werden nachfolgend als mittlere Potenziale UO bezeichnet.

Die Potenziale U+, UO, U- werden Lasten 4 zugeführt. Die Lasten 4 können entsprechend der Darstellung in FIG 1 beispielsweise jeweils als elektrische Maschinen 4' ausgebildet sein, die über je einen Frequenzumrichter 4" gespeist werden. Die Lasten 4 können aber auch anders ausgestaltet sein. Die Lasten 4 sind nicht Gegenstand der vorliegenden Erfindung.

Die Gleichrichterschaltung 1 weist mehrere Speiseleitungen 5 aufweist. Über die Speiseleitungen 5 werden dem Gleichrichter 2 Phasenspannungen L1, L2, L3 eines Versorgungsnetzes 6 zugeführt. In den Speiseleitungen 5 sind zum Versorgungsnetz 6 hin Filterelemente 7 angeordnet. Die Filterelemente 7 können als Drosseln ausgebildet sein oder Drosseln umfassen. Das Versorgungsnetz 6 und die Filterelemente 7 sind als solche nicht Gegenstand der vorliegenden Erfindung. Weiterhin sind in den Speiseleitungen 5 Drosseln 8 angeordnet. Die dem Gleichrichter 2 zugeführten Phasenspannungen L1, L2, L3 werden dem Gleichrichter 2 somit über die jeweilige Drossel 8 zugeführt. Die Drosseln 8 sind Bestandteil der Gleichrichterschaltung 1.

Für die innere Ausgestaltung des Gleichrichters 2 sind verschiedene Ausgestaltungen möglich. Nachfolgend werden mögliche Ausgestaltungen für den häufigsten Fall erläutert, bei dem der Gleichrichter 2 zusätzlich zu dem hohen und dem niedrigen Potenzial U+, U- nur ein einziges mittleres Potenzial UO bereitstellt.

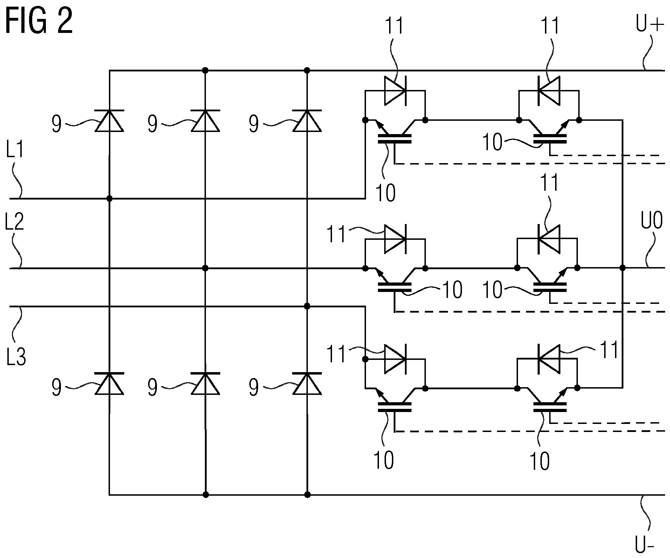

In diesem Fall kann der Gleichrichter 2 beispielsweise entsprechend der Darstellung in FIG 2 Dioden 9 aufweisen. Mittels der Dioden 9 werden die dem Gleichrichter 2 zugeführten Phasenspannungen L1, L2, L3 gleichgerichtet. Auf diese Art und Weise werden das hohe und das niedrige Potenzial U+, U-generiert. Weiterhin weist der Gleichrichter 2 bidirektional wirkende elektronische Schalteinrichtungen auf. Üblicherweise weisen die elektronischen Schalteinrichtungen entsprechend der Darstellung in FIG 2 zwei in Reihe geschaltete elektronische Schalter 10 auf, beispielsweise IGBTs oder FETs. Gegebenenfalls können den elektronischen Schaltern 10 Dioden 11 parallel geschaltet sein. Die Dioden 11 können alternativ eigenständige Bauelemente oder intrinsische Elemente der elektronischen Schalter 10 sein. Mittels der elektronischen elektronische Schalteinrichtungen wird aufgrund einer entsprechenden Ansteuerung das mittlere Potenzial UO bereitgestellt.

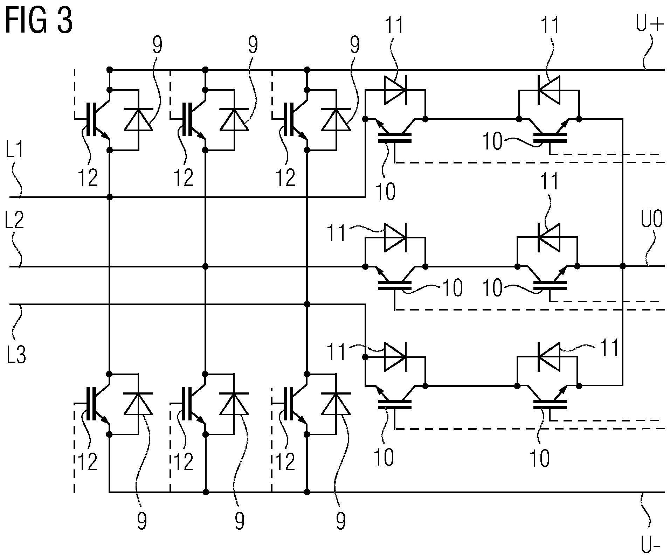

Alternativ kann der Gleichrichter 2 entsprechend der Darstellung in FIG 3 anstelle der Dioden 9 oder parallel zu den Dioden 9 elektronische Schalter 12 aufweisen, beispielsweise IGBTs oder FETs. Die Dioden 9 können, sofern sie weiterhin vorhanden sind, alternativ eigenständige Bauelemente oder intrinsische Elemente der elektronischen Schalter 12 sein. Mittels der elektronischen Schalter 12 werden aufgrund einer entsprechenden Ansteuerung das hohe und das niedrige Potenzial U+, U- bereitgestellt. Weiterhin sind - analog zu FIG 2 - die elektronischen Schalteinrichtungen vorhanden, mittels derer das mittlere Potenzial UO bereitgestellt wird.

Sowohl der schaltungstechnische Aufbau der Gleichrichter 2 der FIG 2 und 3 als auch deren Betrieb sind Fachleuten allgemein bekannt. Detaillierte Ausführungen hierzu sind daher nicht erforderlich.

Gemäß FIG 1 weist die Gleichrichterschaltung 1 weiterhin eine Anzahl von Clampingschaltungen 13 auf. Minimal ist eine einzige Clampingschaltung 13 vorhanden. Es können aber auch mehrere Clampingschaltungen 13 vorhanden sein. Insbesondere kann entsprechend der Darstellung in FIG 1 für je zwei aufeinanderfolgende bereitgestellte Potenziale U+, UO bzw. U0, U- je eine Clampingschaltung 13 vorhanden sein. Falls mehrere Clampingschaltungen 13 vorhanden sind, sind sie in der Regel untereinander gleich ausgebildet. Nachfolgend wird daher nur eine der Clampingschaltungen 13 näher erläutert.

Die Clampingschaltung 13 weist eine Reihenschaltung von zwei Diodenschaltungen 14 auf. Die beiden Diodenschaltungen 14 der Clampingschaltung 13 können jeweils einzelne Dioden oder Reihenschaltungen oder Parallelschaltungen von Dioden sein.

Endpunkte 15 der genannten Reihenschaltung sind mit je einem Ausgang 3 verbunden, an dem der Gleichrichter 2 je eines der Potenziale U+, UO, U- bereitstellt. Einer der Ausgänge 3 ist derjenige Ausgang 3, an dem der Gleichrichter 2 das mittlere Potenzial UO bereitstellt. Ein weiterer der Ausgänge 3 ist derjenige Ausgang 3, an dem der Gleichrichter 2 das hohe Potenzial U+ oder das niedrige Potenzial U- bereitstellt. Im Falle der Ausgestaltung gemäß FIG 1, bei welcher der Gleichrichter 2 insgesamt exakt drei Potenziale U+, UO, U- bereitstellt, ist dies zwangsläufig der Fall. Falls der Gleichrichter 2 mehr als drei Ausgänge 3 aufweist und demzufolge auch mehr als drei Potenziale U+, UO, U- bereitstellt, kann dies ebenfalls der Fall sein. Falls der Gleichrichter 2 mehr als drei Ausgänge 3 aufweist und demzufolge auch mehr als drei Potenziale U+, UO, U- bereitstellt, können über die Reihenschaltung der Diodenschaltungen 14 jedoch auch zwei Ausgänge 3 miteinander verbunden sein, welche zwei voneinander verschiedene mittlere Potenziale UO bereitstellen. Vorzugsweise stellen die beiden Ausgänge 3, welche über die Reihenschaltung der Diodenschaltungen 14 miteinander verbunden sind, unmittelbar benachbarte Potenziale U+, UO, U- bereit. Vorzugsweise stellt der Gleichrichter 2 also kein Potenzial bereit, das zwischen den beiden Potenzialen U+, UO bzw. UO, U- liegt, deren korrespondierende Ausgänge 3 über die Reihenschaltung der Diodenschaltungen 14 miteinander verbunden sind.

Die Clampingschaltung 11 weist weiterhin eine Gesamt-Kondensatorschaltung 16 auf. Über die Gesamt-Kondensatorschaltung 16 ist ein Knotenpunkt 17 mit einem Referenzpotenzial PE verbunden, beispielsweise mit Masse oder Erde. Der Knotenpunkt 17 ist seinerseits zwischen den beiden Diodenschaltungen 14 angeordnet.

Es ist möglich, dass die Gesamt-Kondensatorschaltung 16 direkt mit dem Referenzpotenzial PE verbunden ist. Entsprechend der Darstellung in FIG 1 weist die Gesamt-Kondensatorschaltung 16 jedoch eine Anzahl von Reihenschaltungen auf, die ihrerseits jeweils aus zwei Teil-Kondensatorschaltungen 18, 19 bestehen. Die eine Teil-Kondensatorschaltung 18 einer derartigen Reihenschaltung verbindet den Knotenpunkt 17 mit einem Leitungsabschnitt einer der Speiseleitungen 5. Die andere Teil-Kondensatorschaltung 19 einer derartigen Reihenschaltung verbindet denselben Leitungsabschnitt mit dem Referenzpotenzial PE. Der Leitungsabschnitt ist derart gewählt, dass die Drossel 8 der entsprechenden Speiseleitung 5 zwischen dem Gleichrichter 2 und dem genannten Leitungsabschnitt angeordnet ist.

In der Regel wird die Gesamt-Kondensatorschaltung 16 symmetrisch in dem Sinne ausgebildet sein, dass für jede Phasenspannung L1, L2, L3 je eine derartige Reihenschaltung vorhanden ist, die ihrerseits aus zwei Teil-Kondensatorschaltungen 18, 19 besteht. Dies ist aber nicht zwingend erforderlich.

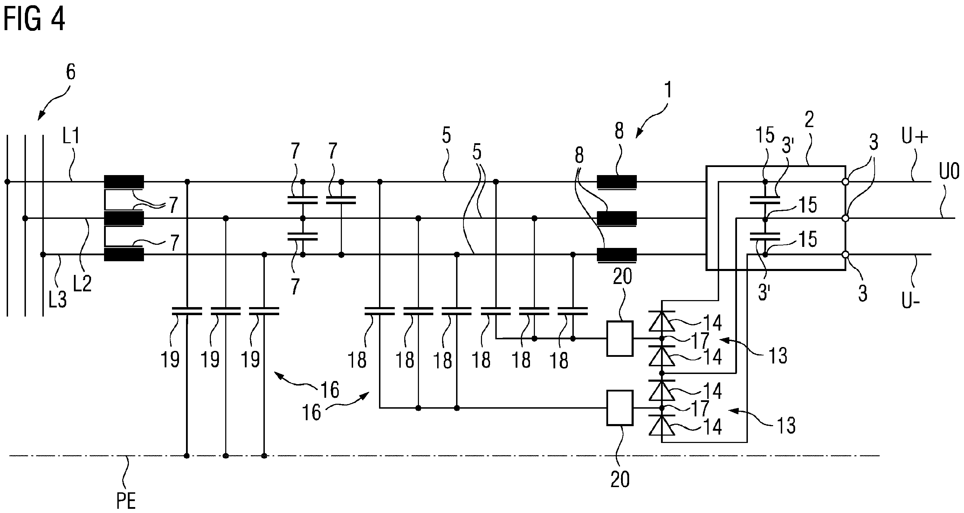

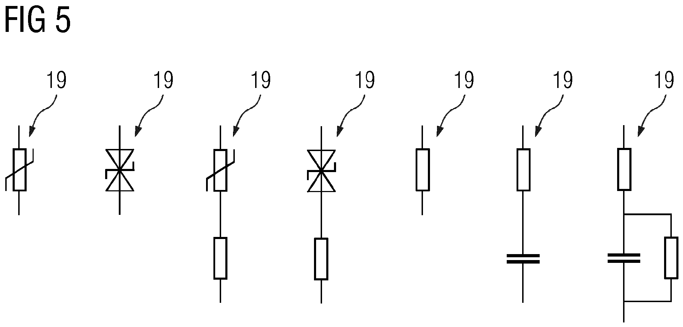

Im einfachsten Fall ist die Gesamt-Kondensatorschaltung 16 direkt mit dem Knotenpunkt 17 verbunden. Es ist jedoch entsprechend der Darstellung in FIG 4 alternativ möglich, dass die Clampingschaltung 13 ein Schaltungsnetzwerk 20 aufweist. Das Schaltungsnetzwerk 20 ist in diesem Fall zwischen dem Knotenpunkt 17 und der Gesamt-Kondensatorschaltung 16 angeordnet. Das Schaltungsnetzwerk 20 als solches kann auf verschiedene Art und Weise ausgebildet sein. So kann das Schaltungsnetzwerk 20 beispielsweise entsprechend der Darstellung in FIG 5 alternativ folgende Ausgestaltungen aufweisen:
- Es kann als Varistor ausgebildet sein. Ein Varistor ist, wie Fachleuten allgemein bekannt ist, ein elektrisches Bauelement, dessen Widerstand von der über dem Bauelement abfallenden elektrischen Spannung abhängig ist. Insbesondere wird der differenzielle Widerstand des Varistors oberhalb einer bestimmten Schwellenspannung rapide kleiner. Die Schwellenspannung ihrerseits ist durch die Bauart und die Auslegung des Varistors festgelegt.
- Es kann als Varistor ausgebildet sein, dem ein Widerstand in Reihe geschaltet ist.
- Es kann als Zenerdiode ausgebildet sein.
- Es kann als Zenerdiode ausgebildet sein, der ein Widerstand in Reihe geschaltet ist.
- Es kann als Dämpfungswiderstand ausgebildet sein.
- Es kann als Reihenschaltung eines Widerstandes und eines Kondensators ausgebildet sein.
- Es kann als Reihenschaltung eines Widerstandes und eines Kondensators ausgebildet sein, wobei der Kondensator zusätzlich durch einen weiteren Widerstand überbrückt ist.

### Zusammengefasst betrifft die vorliegende Erfindung somit folgenden Sachverhalt:

Ein Gleichrichter 2 weist mindestens drei Ausgänge 3 auf, an denen der Gleichrichter 2 ein hohes Potenzial U+, ein niedriges Potenzial U- und mindestens ein mittleres Potenzial UO bereitstellt. Über Speiseleitungen 5 sind dem Gleichrichter 2 Phasenspannungen L1, L2, L3 eines Versorgungsnetzes 6 zuführbar. In den Speiseleitungen 5 sind Drosseln 8 angeordnet. Eine Clampingschaltung 13 weist zwei in Reihe geschaltete Diodenschaltungen 14 auf. Einer der Endpunkte 15 der Reihenschaltung ist mit einem Ausgang 3 verbunden, an dem der Gleichrichter 2 eines der mittleren Potenziale UO bereitstellt. Der andere Endpunkt 15 ist mit einem anderen Ausgang 3 verbunden. Über eine Gesamt-Kondensatorschaltung 16 ist der Knotenpunkt 17 mit einem Referenzpotenzial PE verbunden.

Die vorliegende Erfindung weist viele Vorteile auf. Aufgrund der Verwendung einer Gleichrichterschaltung 1, welche zusätzlich zu dem hohen Potenzial U+ und dem niedrigen Potenzial U-auch das mittlere Potenzial UO bereitstellt, ist die anregende Gleichtaktspannung bereits deutlich verringert. Durch die Clampingschaltung 13 können weiterhin Potenzialsprünge auf die Hälfte der Potenzialdifferenz der beiden Potenziale U+, UO bzw. UO, U- begrenzt werden, die über die Clampingschaltung 13 miteinander verbunden sind. Dadurch kann insbesondere die Spannungsbelastung an der Isolierung der elektrischen Maschinen 4' nochmals deutlich reduziert werden. Die Lösung ist robust und kostengünstig realisierbar. Die Energie, die in den parasitären Kapazitäten der Leitungen zwischen der Gleichrichterschaltung 1 und den Lasten 4 gespeichert wird, wird zum größten Teil zurück in den Zwischenkreis geführt. Dadurch wird der Wirkungsgrad der Gesamtschaltung insbesondere bei langen derartigen Leitungen verbessert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleichrichterschaltung,
- wobei die Gleichrichterschaltung einen Gleichrichter (2) aufweist,
- wobei der Gleichrichter (2) mindestens drei Ausgänge (3) aufweist, an denen der Gleichrichter (2) jeweils ein Potenzial (U+, UO, U-) bereitstellt,
- wobei eines der bereitgestellten Potenziale (U+, UO, U-) ein hohes Potenzial (U+) ist, das höher als alle anderen bereitgestellten Potenziale (UO, U-) ist,
- wobei ein weiteres der bereitgestellten Potenziale (U+, UO, U-) ein niedriges Potenzial (U-) ist, das niedriger als alle anderen bereitgestellten Potenziale (U+, UO) ist,
- wobei die bereitgestellten Potenziale (U+, UO, U-) mit Ausnahme des hohen Potenzials (U+) und des niedrigen Potenzials (U-) mittlere Potenziale (UO) sind, die zwischen dem hohen und dem niedrigen Potenzial (U+, U-) liegen,
- wobei die Gleichrichterschaltung mehrere Speiseleitungen (5) aufweist, über die dem Gleichrichter (2) jeweils eine Phasenspannung (L1, L2, L3) eines Versorgungsnetzes (6) zuführbar ist,
- wobei die Gleichrichterschaltung in den Speiseleitungen (5) angeordnete Drosseln (8) aufweist,
**dadurch gekennzeichnet,**
- **dass** die Gleichrichterschaltung mindestens eine Clampingschaltung (13) aufweist,
- **dass** die Clampingschaltung (13) eine Reihenschaltung von zwei Diodenschaltungen (14) aufweist, so dass die Reihenschaltung einen zwischen den beiden Diodenschaltungen (14) angeordneten Knotenpunkt (17) und zwei Endpunkte (15) aufweist,
- **dass** einer der Endpunkte (15) mit einem der Ausgänge (3) verbunden ist, an denen der Gleichrichter (2) eines der mittleren Potenziale (UO) bereitstellt,
- **dass** der andere Endpunkt (15) mit einem anderen der Ausgänge (3) verbunden ist und
- **dass** die Clampingschaltung (13) eine Gesamt-Kondensatorschaltung (16) aufweist, über die der Knotenpunkt (17) mit einem Referenzpotenzial (PE) verbunden ist.

2. Gleichrichterschaltung nach Anspruch 1,
**dadurch gekennzeichnet,**
- **dass** die Gesamt-Kondensatorschaltung (16) mindestens eine Reihenschaltung aufweist, die aus zwei Teil-Kondensatorschaltungen (18, 19) besteht,
- **dass** die eine Teil-Kondensatorschaltung (18) den Knotenpunkt (17) mit einem Leitungsabschnitt einer der Speiseleitungen (5) verbindet,
- **dass** die andere Teil-Kondensatorschaltung (19) denselben Leitungsabschnitt mit dem Referenzpotenzial (PE) verbindet und
- **dass** die in der entsprechenden Speiseleitung (5) angeordnete Drossel (8) zwischen dem Gleichrichter (2) und dem Leitungsabschnitt angeordnet ist.

3. Gleichrichterschaltung nach Anspruch 1 oder 2,
**dadurch gekennzeichnet,**
- **dass** die Clampingschaltung (13) ein Schaltungsnetzwerk (20) aufweist,
- **dass** das Schaltungsnetzwerk (20) zwischen dem Knotenpunkt (17) und der Gesamt-Kondensatorschaltung (16) angeordnet ist und
- **dass** das Schaltungsnetzwerk (20) einen Varistor mit einem oder ohne einen in Reihe geschalteten Widerstand, eine Zenerdiode mit einem oder ohne einen in Reihe geschalteten Widerstand, einen Dämpfungswiderstand oder eine Reihenschaltung eines Widerstandes und eines Kondensators mit einem oder ohne einen den Kondensator überbrückenden Widerstand aufweist.
